# EUROPÄISCHE PATENTSCHRIFT

(11) **EP 0 754 692 B1**
(45) Veröffentlichungstag und Bekanntmachung des Hinweises auf die Patenterteilung: **24.10.2001**
(21) Anmeldenummer: 96110872.7
(22) Anmeldetag: 05.07.1996
(51) Int. Cl.: C07F 7/22, C03C 17/25

(54) **Stabilisiertes Monobutylzinntrichlorid**
Stabilized monobutyltrichlorotin
Monobutyltrichloroétain stabilisé

(30) Priorität: 18.07.1995 DE 19526100
(43) Veröffentlichungstag der Anmeldung: 22.01.1997
(73) Patentinhaber: Atofina Vlissingen B.V., 4389 PD Ritthem (NL)
(72) Erfinder: Eisen, Hans-Günther, 45307 Essen (DE); Mecking, Maria, 46244 Bottrop (DE); Vallerien, Sven-Uwe, Dr., 45239 Essen (DE)
(74) Vertreter: Ohresser, François

(56) Entgegenhaltungen:
- EP-A- 0 132 024

## Beschreibung

Die Erfindung betrifft ein insbesondere für die Hohlglasbeschichtung geeignetes Monobutylzinntrichlorid (MBTC), welches gegen den Einfluß von Feuchtigkeit und Nachdunkeln stabilisiert ist.

Es ist bekannt, Schichten aus verschiedensten Metalloxiden, insbesondere aus Zinndioxid, auf Glasbehälter aufzubringen, um deren Schlag- und Abriebbeständigkeit zu verbessern. Diese Zinndioxidschicht wirkt als Primer für die nach dem Entspannungsprozeß aufgebrachte sogenannte Kaltendvergütung.

Üblicherweise werden Zinnverbindungen in Dampf- oder Sprayform bei der sogenannten Heißendvergütung mit der heißen Glasoberfläche in Kontakt gebracht, wobei pyrolytisch eine dünne Zinndioxidschicht erzeugt wird. Aufgrund ihrer physikalischen Eigenschaften, wie Wasserlöslichkeit, Verdampfbarkeit und dgl. sowie ihrer geringen Toxizität werden hierzu insbesondere Monoorganozinntrichloride eingesetzt (DE-C-25 41 710).

Bei der Verarbeitung dieser Verbindungen hat sich je nach Reinheit und Qualität der Produkte jedoch gezeigt, daß durch das Auftreten von festen Partikeln, insbesondere nach langer Lagerung, es bei dem Glasbeschichtungsprozeß zu erheblichen Störungen kommen kann.

Gemäß EP-A-0 132 024 werden zur Vermeidung des Auftretens fester Partikel den Monoalkylzinntrihalogeniden Dotierstoffe der verschiedensten Art, insbesondere Alkohole, zugesetzt.

Ein weiteres Problem, daß bei Monobutylzinntrichlorid nach längerer Lagerung auftritt, ist eine Nachdunkelung, die bis zur Dunkelbraunfärbung führen kann. Diese Dunkelfärbung des Produktes kann den Verarbeitungsprozeß, insbesondere bei Meß- und Dosiervorgängen ebenfalls erheblich beeinträchtigen. Weiterhin kommt es bei Monobutylzinntrichlorid unter dem Einfluß von Feuchtigkeit sehr schnell zu sichtbaren Auskristallisationen; bei längerer Einwirkung, vermutlich hervorgerufen durch Hydratausbildung, kann es sogar zur Ausbildung eines flüssigen Mehrphasensystems kommen.

Es wurde nun gefunden, daß man ein gegen den Einfluß von Feuchtigkeit und Nachdunkeln stabilisiertes Monobutylzinntrichlorid erhält, wenn diesem Glycerinester aliphatischer Carbonsäuren zugesetzt sind. Geeignete Ester sind sowohl die Glycerinmono- als auch die -di- und -triester aliphatischer, gegebenenfalls ungesättigter Carbonsäuren mit bis 18 Kohlenstoffatomen. Geeignete Glycerinester sind beispielsweise Acetate, Propionate, 2-Ethylhexanoate, Valeriate, Caprylate, Dodecanoate sowie Octadecanoate. Besonders wirksam sind dabei Glycerinmono- und -diacetat bzw. Mischungen aus beiden und 2-Ethylhexansäureester.

Als Zusatzmengen können 0,5 bis 10 Gew.-% gewählt werden; in der Regel sind 0,5 bis 1,5 Gew.-% ausreichend.

Die erfindungsgemäß eingesetzten Stabilisatoren sind dabei überraschend erheblich wirksamer als die Dotiermittel des Standes der Technik. So ist beispielsweise (siehe Beispiele) bei Einsatz von 1 % Glycerinmonoacetat eine Kristallisation nur zu 15 % eingetreten, während bei den Dotiermitteln gemäß EP-A-0 132 024 nach der gleichen Zeit eine Kristallisation auf der gesamten Oberfläche vorhanden ist.

Die Wirksamkeit der eingesetzten Stabilisatoren wird anhand der nachfolgenden Beispiele näher erläutert.

### Prüfung von MBTC auf Stabilität gegenüber Umgebungsfeuchtigkeit

Um den Einfluß von Umgebungsfeuchtigkeit auf MBTC zu testen, werden MBTC-Proben offen stehend beobachtet und die Zeit festgehalten, nach der sich jeweils merkliche Veränderungen am Produkt registrieren lassen.

Zu diesem Zweck werden Uhrgläser mit 10 cm Durchmesser mit jeweils 2 ml MBTC-Probe versehen und nebeneinander offen in einem Abzug stehend der Umgebungsluft ausgesetzt.

Die Abzugsfrontklappe wird 15 cm über Boden offen gehalten, der Mittelpunkt der Probegläser befindet sich 10 cm von der Öffnung entfernt.

Die Tests werden mit unterschiedlichen Positionen der Uhrgläser zueinander wiederholt und die Testergebnisse gemittelt, um etwaige Teststreuungen auszugleichen.

In der Versuchsanordnung beginnt diese Auskristallisation am Rand der Flüssigkeitsoberfläche und setzt sich anschließend nach innen fort.

In der Tabelle ist der Anteil der kristallisierten Oberfläche, bezogen auf die Gesamtoberfläche, angegeben. Je niedriger der Anteil der kristallisierten Fläche, um so besser ist die Wirkung.
Glmono: Glycerinmonoacetat
Gldiac: Glycerindiacetat
Gltriac: Glycerintriacetat
Gl-2eth-mono: Glycerin-2-Ethylhexansäure-monoester
Gl-2eth-di: Glycerin-2-Ethylhexansäure-diester

| Testdauer (Stunden) | MBTC ohne Zusatz* | MBTC + 1 % Ethanol* | MBTC + 0,5 % Glmono | MBTC + 1 % Glmono | MBTC + 1,5 % Glmono | MBTC + 0,5 % Gldiac | MBTC + 1 % Gldiac | MBTC + 1,5 % Gldiac |
|---|---|---|---|---|---|---|---|---|
| 1 | 100 % | 15 % | 10 % | 5 % | 2 % | 10 % | 5 % | 1 % |
| 2 | ---- | 50 % | 15 % | 10 % | 5 % | 15 % | 10 % | 5 % |
| 3 | ---- | 100 % | 50 % | 15 % | 10 % | 40 % | 15 % | 10 % |

| | | | | | | | | |
|---|---|---|---|---|---|---|---|---|
| * Vergleichsversuch | | | | | | | | |

| Testdauer (Stunden) | MBTC + 0,5 % Gltriac | MBTC + 1 % Gltriac | MBTC + 1,5 % Gltriac | MBTC + 1 % Gl-2eth-mono | MBTC + 1 % Gl-2eth-di |
|---|---|---|---|---|---|
| 1 | 15 % | 10 % | 5 % | 5 % | 5 % |
| 2 | 20 % | 15 % | 10 % | 5 % | 5 % |
| 3 | 50 % | 25 % | 15 % | 10 % | 10 % |

### Prüfung von MBTC auf Stabilität gegenüber Nachdunkeln

MBTC dunkelt beim Stehen an Licht nach, was dazu führt, daß die zunächst fast wasserhelle Flüssigkeit nach einiger Zeit ein dunkelbraunes Aussehen annimmt.

Als zusätzlicher Effekt zeigt sich, insbesondere bei den Mono/Diestern des Glycerins, eine Stabilisierung gegenüber diesem Nachdunkeln, so daß dieser Vorgang erheblich verlangsamt wird.

| | Ausgangsfarbe | 1 Woche gelagert | 1 Monat gelagert | 3 Monate gelagert |
|---|---|---|---|---|
| MBTC + 1 % Ethanol* | fast wasserhell | gelb | hellbraun | dunkelbraun |
| MBTC + 1 % Glmono | fast wasserhell | fast wasserhell | fast wasserhell | hellgelb |
| MBTC + 1 % Gldiac | fast wasserhell | fast wasserhell | fast wasserhell | hellgelb |

| | | | | |
|---|---|---|---|---|
| * Vergleichsversuch | | | | |

## Patentansprüche

1. Monobutylzinntrichlorid, enthaltend als Stabilisator Glycerinester von gegebenenfalls ungesättigten aliphatischen Carbonsäuren mit 1 bis 18 Kohlenstoffatomen.

2. Monobutylzinntrichlorid nach Anspruch 1, **dadurch gekennzeichnet, daß** der Stabilisator in Mengen von 0,5 bis 10 Gew.-% zugesetzt ist.

3. Monobutylzinntrichlorid nach Anspruch 1 und 2, **dadurch gekennzeichnet, daß** der Stabilisator Glycerinmonoacetat, Glycerindiacetat oder ein Gemisch aus beiden ist.

## Claims

1. Monobutyltin trichloride, comprising as stabilizer glycerol esters of optionally unsaturated aliphatic carboxylic acids having 1 to 18 carbon atoms.

2. Monobutyltin trichloride according to Claim 1, **characterized in that** the stabilizer is added in amounts from 0.5 to 10% by weight.

3. Monobutyltin trichloride according to Claims 1 and 2, **characterized in that** the stabilizer is glycerol monoacetate, glycerol diacetate or a mixture of both.

## Revendications

1. Trichlorure de monobutylétain comprenant, en tant que stabilisant, des esters du glycérol et d'acides carboxyliques aliphatiques éventuellement insaturés ayant de 1 à 18 atomes de carbone.

2. Trichlorure de monobutylétain selon la revendication 1, **caractérisé en ce que** le stabilisant est ajouté en quantités de 0,5 à 10% en poids.

3. Trichlorure de monobutylétain selon les revendications 1 et 2, **caractérisé en ce que** le stabilisant est le monoacétate de glycérol, le diacétate de glycérol ou un mélange des deux.
